# EUROPÄISCHE PATENTSCHRIFT

(11) **EP 0 839 824 B1**
(45) Veröffentlichungstag und Bekanntmachung des Hinweises auf die Patenterteilung: **15.01.2003**
(21) Anmeldenummer: 97118617.6
(22) Anmeldetag: 27.10.1997
(51) Int. Cl.: C07F 17/00, C08F 10/00

(54) **Metallocene mit teilhydrierten pi-Liganden**
Metallocenes with partially hydrogenated pi-ligands
Métallocènes contenant des pi-ligands partiellement hydrogénés

(30) Priorität: 31.10.1996 DE 19644041
(43) Veröffentlichungstag der Anmeldung: 06.05.1998
(73) Patentinhaber: Basell Polyolefine GmbH, 50389 Wesseling (DE)
(72) Erfinder: Winter, Andreas, Dr., 61479 Glashütten (DE); Zenk, Roland, Dr., 65812 Bad Soden (DE); Fraaije, Volker, Dr., 60325 Frankfurt (DE); Küber, Frank, Dr., 61440 Oberursel (DE)

(56) Entgegenhaltungen:
- EP-A- 0 611 772

## Beschreibung

Die vorliegende Erfindung betrifft ein Metallocen mit teilhydriertem π-Ligandsystem und die Verwendung mindestens eines dieser Metallocene zur Herstellung von Polyolefinen.

Aus EP-A-576 970 sind Metallocene bekannt, die Olefine, insbesondere Aus EP-A-576 970 sind Metallocene bekannt, die Olefine, insbesondere Propylen, mit sehr hoher Katalysatoraktivität und sehr hoher Stereospezifität in isotaktische Polyolefine, insbesondere isotaktische Polypropylene umwandeln können. Aus EP-A-611772 sind Metallocene mit Hydroazulenliganden bekannt, aus denen Katalysatoren hergestellt werden, die mit hoher Stereospezifität isotaktisches Polypropylen erzeugen.

Die Aufgabe der vorliegenden Erfindung liegt darin, ein Metallocen bereitzustellen, das bei sehr hoher Polymerisationsaktivität gleichzeitig die Herstellung von Polymeren mit abgesenkter Stereospezifität ermöglicht. Eine weitere Aufgabe der vorliegenden Erfindung liegt. darin ein wirtschaftliches und umweltfreundliches Verfahren zur Herstellung von Polymeren mit abgesenkter Stereospezifität bereitzustellen.

Die Lösung der Aufgabe ist ein Metallocen der allgemeinen Formel I, das im π-Ligandsystem teilhydriert ist 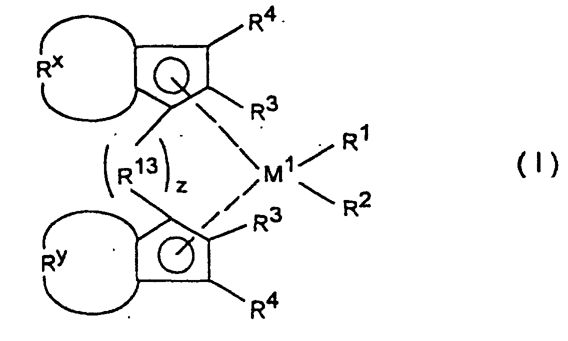 worin
- M¹: ein Metall der Gruppe IVb, Vb oder Vlb des Periodensystems ist,
- R¹ und R²: gleich oder verschieden sind und ein Wasserstoffatom, eine C₁-C₄₀-kohlenstoffhaltige Gruppe wie eine C₁-C₁₀-Alkyl-, eine C₁-C₁₀-Alkoxy-, eine C₆-C₁₀-Aryl-, eine C₆-C₁₀-Aryloxy- eine C₂-C₁₀-Alkenyl-, eine C₇-C₄₀-Arylalkyl-, eine C₇-C₄₀-Alkylaryl- oder eine C₈-C₄₀-Arylalkenylgruppe, eine OH-Gruppe oder ein Halogenatom bedeuten,
- R³ und R⁴: jeweils gleich oder verschieden sind und ein Wasserstoffatom, ein Halogenatom, eine C₁-C₂₀-Kohlenwasserstoffgruppe wie eine C₁-C₁₀-Alkylgruppe, eine C₂-C₁₀-Alkenylgruppe oder eine C₆-C₁₀-Arylgruppe, einen NR¹⁶₂-, SR¹⁶-, OSiR¹⁶₃-, SiR¹⁶₃- oder PR¹⁶₂-Rest, worin R¹⁶ ein Halogenatom, eine C₁-C₁₀-Aikylgruppe oder eine C₆-C₁₀-Arylgruppe ist, bedeuten,
- R¹³: eine Verbrückung ist wie 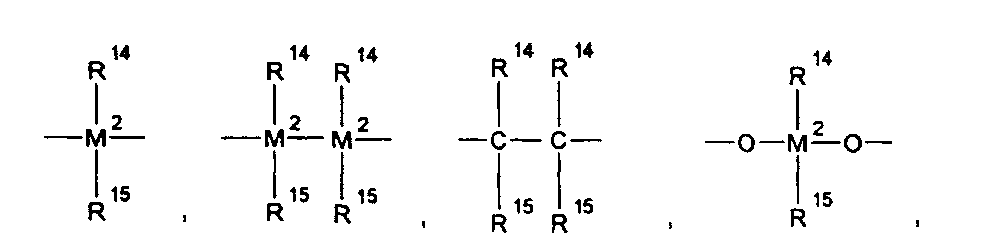 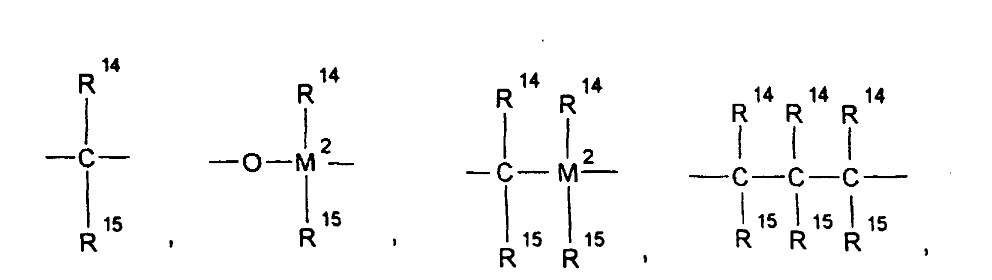 =BR¹⁴, =AlR¹⁴, -Ge-, -O-, -S-, =SO, =SO₂, =NR¹⁴, =CO, =PR¹⁴ oder =P(O)R¹⁴ ist, wobei R¹⁴ und R¹⁵ jeweils gleich oder verschieden sind und ein Wasserstoffatom, ein Halogenatom, oder eine C₁-C₄₀-kohlenstoffhaltige Gruppe, wie eine Si(C₁-C₁₀-alkyl)₃-Gruppe, eine Si(C₆-C₂₀-aryl)₃-Gruppe, eine N(C₁-C₁₀-alkyl)₂-Gruppe, eine N(C₆-C₂₀-aryl)₂-Gruppe, eine B(C₁-C₁₀-alkyl)₂₋Gruppe, eine N(C₆-C₂₀-aryl)₂-Gruppe, eine C₁-C₁₀-Alkylgruppe, eine C₁-C₁₀-Fluoralkylgruppe, eine C₆-C₂₀-Arylgruppe, eine C₆-C₂₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁴ und R¹⁵ jeweils mit den sie verbindenden Atomen ein Ringsystem bilden, M² Silizium, Germanium oder Zinn ist und
- z: 0 oder 1 ist,
- R^{x} und R^{y}: gleich oder verschieden sind und eine viergtiedrige Gruppe darstellen 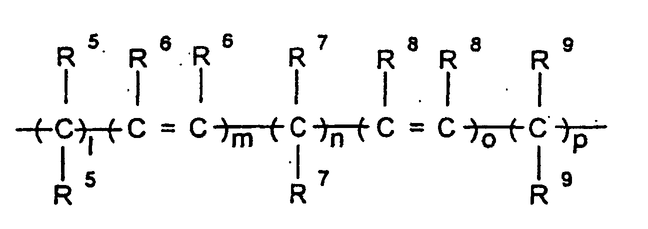
wobei
- R⁵,R⁶,R⁷,R⁸ und R⁹: jeweils gleich oder verschieden sind und ein Wasserstoffatom, ein Halogenatom, oder eine C₁-C₄₀-kohlenstoffhaltige Gruppe, wie eine Si(C₁-C₁₀-alkyl)₃-Gruppe, eine Si(C₆-C₂₀-aryl)₃-Gruppe, eine N(C₁-C₁₀-alkyl)₂-Gruppe, eine N(C₆-C₂₀-aryl)₂-Gruppe, eine B(C₁-C₁₀-alkyl)₂-Gruppe, eine B(C₆-C₂₀-aryl)₂-Gruppe, eine C₁-C₁₀-Alkylgruppe, eine C₁-C₁₀-Fluoralkylgruppe, eine C₆-C₂₀-Arylgruppe, eine C₆-C₂₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder jeweils zwei Reste R⁵,R⁶, R⁷, R8 und R⁹ mit den sie verbindenden Atomen ein Ringsystem bilden, und
l+n+p = 2 und m+o = 1 ist, z.B.
l = 1, m = 1, n = 1, o und p = 0 oder
l = 2, m = 1, n, o, und p = 0 oder
l = 0, m = 1, n = 2, o und p=0.

Alkyl kann geradkettiges oder verzweigtes Alkyl sein, Halogen (halogeniert) bedeutet insbesondere Fluor, Chlor, Brom oder Jod, bevorzugt Fluor oder Chlor. Der Begriff Ringsystem umfaßt ein- und mehrkernige Ringsysteme, die unsubstituiert oder substituiert sein können. Weiterhin gilt, daß Reste mit gleicher Indizierung gleich oder auch voneinander verschieden sein können.

Für das Metallocen der Formel I gilt bevorzugt, daß
- M¹: ist bevorzugt Zr, Hf oder Ti, besonders bevorzugt Zr,
- R¹ und R²: sind gleich oder verschieden, bevorzugt gleich und bedeuten ein Wasserstoffatom, eine C₁-C₁₀-, vorzugsweise C₁-C₄-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor. Insbesondere sind R¹ und R² eine C₁-C₁₀-Alkylgruppe oder ein Halogenatom.
- R³: sind bevorzugt gleich und bedeuten ein Halogenatom, bevorzugt Chlor, eine C₁-C₁₀- vorzugsweise C₁-C₄-Alkylgruppe,eine C₂-C₁₀-, vorzugsweise C₂-C₄₋Alkenylgruppe, eine C₆-C₁₀-, vorzugsweise C₆-C₈-Arylgruppe, einen NR¹⁶₂-, SR¹⁶-, OSiR¹⁶₃-, SiR¹⁶₃- oder PR¹⁶₂-Rest, worin R¹⁶ ein Halogenatom, bevorzugt Chlor, eine C₁-C₁₀- bevorzugt C₁-C₄-Alkylgruppe oder eine C₆-C₁₀- bevorzugt C₆-C₈-Arylgruppe bedeutet. Insbesondere ist R³ eine C₁-C₁₀-Alkylgruppe.
- R⁴: sind bevorzugt gleich und bedeuten ein Wasserstoffatom.
- R¹³: bedeutet bevorzugt 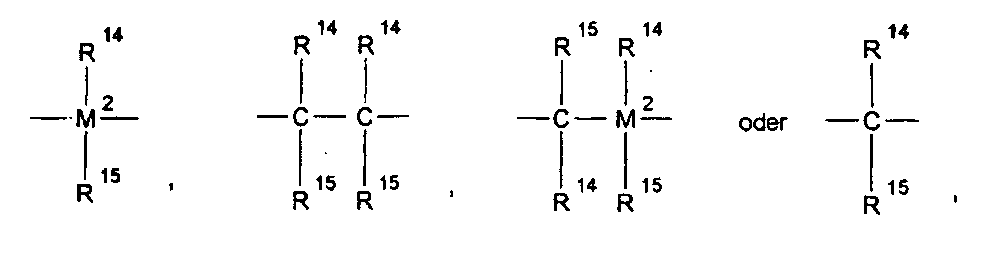
wobei
- R¹⁴ und R¹⁵: gleich oder verschieden sind und ein Wasserstoffatom, ein Halogenatom, bevorzugt Chlor, eine Si(C₁-C₁₀-alkyl)₃-, bevorzugt Si(methyl)₃-Gruppe, eine N(C₁-C₁₀-alkyl)₂-, bevorzugt Ntmethyl)₂-Gruppe, eine N(C₆-C₁₀-aryl)₂-, bevorzugt N(phenyl)₂-Gruppe, eine Si(C₆-C₁₀-aryl)₃-, bevorzugt Si(phenyl)₃-Gruppe, eine B(C₆-C₁₀-alkyl)₂-, bevorzugt B(methyl)₂-Gruppe, eine B(C₆-C₁₀₋aryl)₂-, bevorzugt B(phenyl)₂-Gruppe, eine C₁-C₁₀-, vorzugsweise C₁-C₄-Alkylgruppe, insbesondere Methylgruppe, eine C₁-C₁₀-Fluoralkylgruppe, vorzugsweise CF₃-Gruppe, eine C₆-C₂₀-, vorzugsweise C₆-C₁₂-Arylgruppe, eine C₆-C₂₀-Fluorarylgruppe, vorzugsweise Pentafluorphenylgruppe,eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹⁴ und R¹⁵ bilden jeweils mit den sie verbindenden Atomen ein Ringsystem. Insbesondere sind R¹⁴ und R¹⁵ eine C₁-C₁₀-Alkylgruppe oder eine C₈-C₁₀-Arylgruppe.
- M²: ist Silizium, Germanium oder Zinn, bevorzugt Silizium und Germanium und z ist insbesondere gleich 1.
- R^{x} und R^{y}: sind bevorzugt gleich und bedeuten eine Gruppe 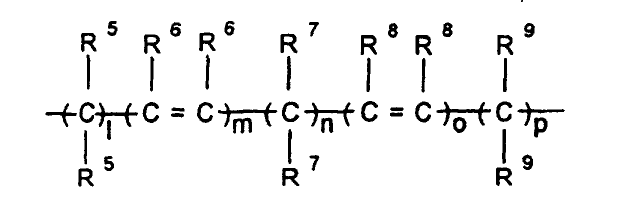
wobei
- R⁵,R⁶,R⁷,R⁸ und R⁹: jeweils gleich oder verschieden sind und bevorzugt ein Wasserstoffatom, ein Halogenatom, bevorzugt Chlor, eine Si(C₁-C₁₀-alkyl)₃-, bevorzugt Si(methyl)₃-Gruppe, eine N(C₁-C₁₀-alkyl)₂-, bevorzugt N(methyl)₂-Gruppe, eine N(C₆-C₁₀-aryl)₂-, bevorzugt N(phenyl)₂-Gruppe, eine Si(C₆-C₁₀-aryl)₃-, bevorzugt Si(phenyl)₃-Gruppe. eine B(C₆-C₁₀-alkyl)₂-, bevorzugt B(methyl)₂-Gruppe, eine B(C₆-C₁₀₋aryl)₂-, bevorzugt B(phenyl)₂-Gruppe, eine C₁-C₁₀-, vorzugsweise C₁-C₄-Alkylgruppe, insbesondere Methylgruppe, eine C₁-C₁₀-Fluoralkylgruppe, vorzugsweise CF₃-Gruppe, eine C₆-C₂₀-, vorzugsweise C₆-C₄-Arylgruppe, eine C₆-C₂₀-Fluorarylgruppe, vorzugsweise Pentafluorphenylgruppe,eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder jeweils zwei Reste R⁵, R⁶, R⁷, R⁸ und R⁹ bilden mit den sie verbindenden Atomen ein Ringsystem. Insbesondere sind R⁵, R⁶, R⁷, R⁸ und R⁹ ein Wasserstoffatom, eine C₁-C₁₀-Alkylgruppe, eine C₆ bis C₂₀-Arylgruppe oder jeweils zwei Reste R⁵, R⁶, R⁷, R⁸ und R⁹ bilden mit dem sie verbindenden Atomen ein Ringsystem.

Bevorzugt ist 2 ≤ l + m + n + o + p ≤ 5, und l, n, m, o und p sind bevorzugt 0, 1, 2 oder 3.

Ganz besonders bevorzugt sind Verbindungen der Formel I, bei denen
- M¹: Zirkonium oder Hafnium ist,
- R¹ und R²: gleich sind und ein Halogenatom oder eine C₁-C₄-Alkylgruppe bedeuten,
- R³: gleich sind und eine C₁-C₄-Alkylgruppe bedeuten,
- R⁴: gleich sind und ein Wasserstoffatom bedeuten,
- R¹³: 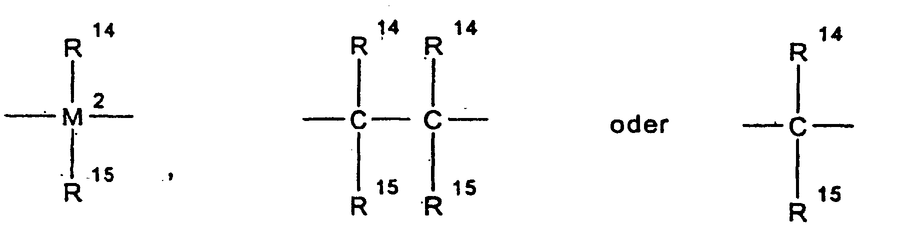
ist, wobei
- M²: Silizium oder Germanium ist, R¹⁴ und R¹⁵ gleich oder verschieden sind und eine C₁-C₁₀-Alkyl- oder C₆-C₁₀-Arylgruppe sind, z gleich 1 ist und
- R^{x} und R^{y}: gleich sind.

Die ganz besonders bevorzugten Metallocene der Formel I sind somit Bisindenylzirkonocene, die im Sechsring teilhydriert sind, 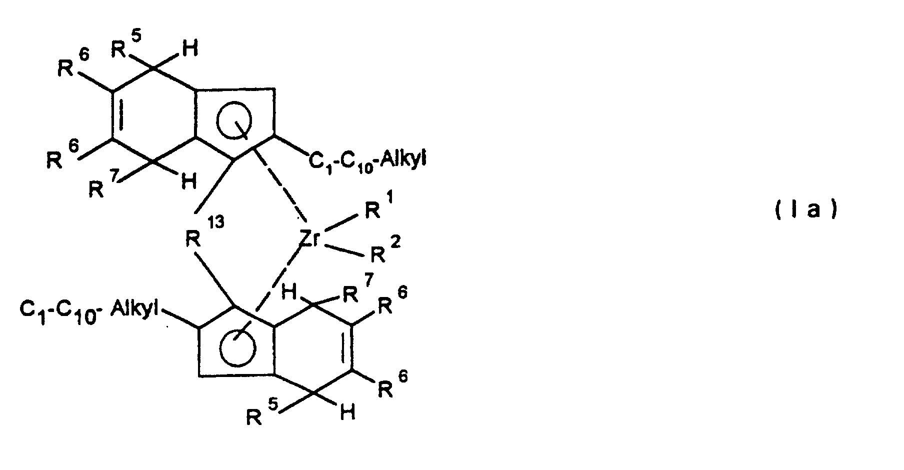 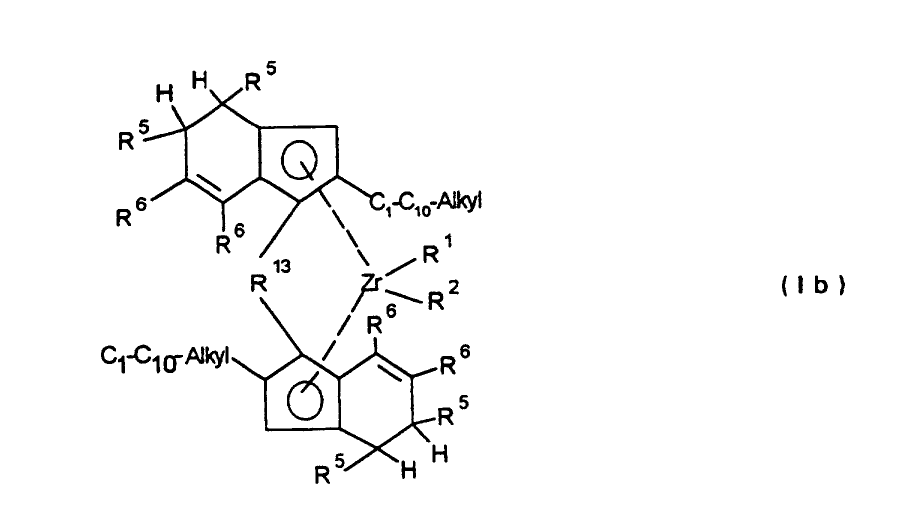 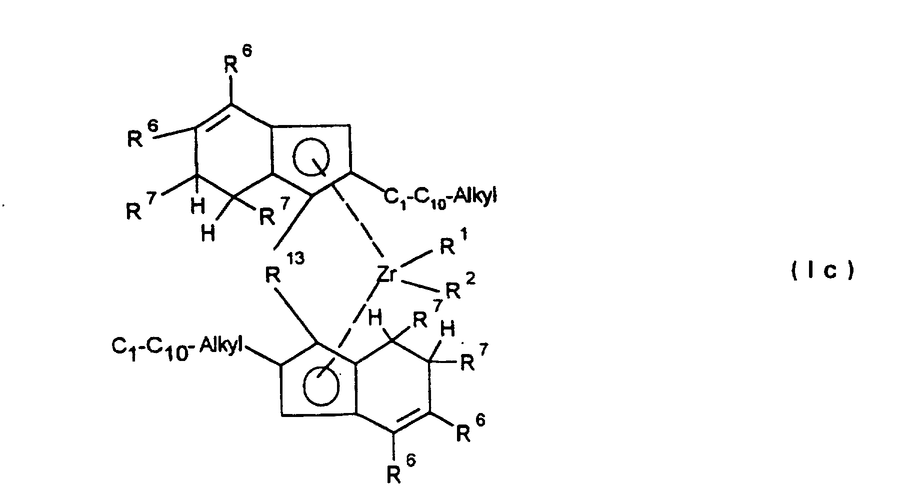 wobei R¹, R², R⁵, R⁶, R⁷ und R¹³ wie in Formel I definiert sind und bevorzugt R⁵, R⁶ und R⁷ jeweils gleich oder verschieden sind und ein Wasserstoffatom oder eine C₁-C₄₀-kohlenstoffhaltige Gruppe, insbesondere eine C₁-C₂₀-Kohlenwasserstoffgruppe wie C₁-C₁₀-Alkyl oder C₆-C₂₀-Aryl, bedeuten oder je zwei Reste R⁵, R⁶ und/oder R⁷ ein Ringsystem bilden können.

Die nachstehende Auflistung führt beispielhaft aber nicht limitierend bevorzugte Metallocene der Formel I auf. Aufgeführt sind die ZrCl₂-Derivate, die entsprechenden ZrMe₂-Derivate, HfCl₂-Derivate und HfMe₂-Derivate sind gleichfalls bevorzugt.

Gleiches gilt für den Ersatz der Dimethylsilandiylbrücke durch Brücken wie (-CR¹⁴R¹⁵-)₂ (z.B. -CH₂-CH₂-), R¹⁴R¹⁵C, R¹⁴R¹⁵Ge- oder R¹⁴R¹⁵Si mit R¹⁴ und/oder R¹⁵ ungleich Methyl.
Dimethylsilandiylbis(2-methyl-4,7-dihydro-1-indenyl)ZrCl₂
Dimethylsilandiylbis(2-methyl-4,5-dihydro-1-indenyl)ZrCl₂
Dimethylsilandiylbis(2-methyl-6,7-dihydro-1-iondenyl)ZrCl₂
Dimethylsilandiylbis(2-methyl-4-phenyl-4,7-dihydro-1-indenyl)ZrCl₂
Dimethylsilandiylbis(2-methyl-4-phenyl-4,5-dihydro-1-indenyl)ZrCl₂
Dimethylsilandiylbis(2-methyl-4-phenyl-6,7-dihydro-1-indenyl)ZrCl₂
Dimethylsilandiylbis(2-methyl-4-(1-naphthyl)-4,7-dihydro-1-indenyl)ZrCl₂
Dimethylsilandiylbis(2-methyl-4-(1-naphthyl)-4,5-dihydro-1-indenyl)ZrCl₂
Dimethylsilandiylbis(2-methyl-4-(1-naphthyl)-6,7-dihydro-1-indenyl)ZrCl₂
Dimethylsilandiylbis(2-ethyl-4-phenyl-6,7-dihydro-1-indenyl)ZrCl₂
Dimethylsilandiylbis(2-isopropyl-4-phenyl-6,7-dihydro-1-indenyl)ZrCl₂
Dimethylsilandiylbis(2-isopropyl-4-(1-naphthyl)-6,7-dihydro-1-indenyl)ZrCl₂
Dimethylsilandiylbis(2-isopropyl-4-phenanthryl-6,7-dihydro-1-indenyl)ZrCl₂
Dimethylsilandiylbis(2-methyl-4,5-benzo-4,7-dihydro-1-indenyl)ZrCl₂
Dimethylsilandiylbis(2-methyl-4,5-benzo-4,5-dihydro-1-indenyl)ZrCl₂
Dimethylsilandiylbis(2-methyl-4,5-benzo-6,7-dihydro-1-indenyl)ZrCl₂
Dimethylsilandiylbis(2-ethyl-4,5-benzo-6,7-dihydro-1-indenyl)ZrCl₂
Dimethylsilandiylbis(2-isopropyl-4,5-benzO-6,7-dihydro-1-indenyl)ZrCl₂
Dimethylsilandiylbis(2-methyl-4,6-diisopropyl-4,7-dihydro-1-indenyl)ZrCl₂
Dimethylsilandiylbis(2-methyl-4,6-diisopropyl-6,7-dihydro-1-indenyl)ZrCl₂
Dimethylsilandiylbis(2-methyl-4,6-diisopropyl-4,5-dihvdro-1-indenyl)ZrCl₂
Dimethylsilandiylbis(2,4,6-trimethyl-4,7-dihydro-1-indenyl)ZrCl₂
Dimethylsilandiylbis(2,4,6-trimethyl-4,5-dihydro-1-indenyl)ZrCl₂
Dimethylsilandiylbis(2,4,6-trimethyl-6,7-dihydro-1-indenyl)ZrCl₂
Dimethylsilandiylbis(2,4,6-triisopropyl-4,7-dihydro-1-indenyl)ZrCl₂
Dimethylsilandiylbis(2,4,6-triisopropyl-4,5-dihydro-1-indenyl)ZrCl₂
Dimethylsilandiylbis(2,4,6-triisopropyl-6,7-dihydro-1-indenyl)ZrCl₂
Dimethylsilandiylbis(2-ethyl-6,7-dihydro-1-indenyl)ZrCl₂
Dimethylsilandiylbis(2-ethyl-4,5-dihydro-1-indenyl)ZrCl₂
Dimethylsilandiylbis(2-ethyl-4,7-dihydro-1-indenyl)ZrCl₂
Dimethylsilandiylbis(2-isopropyl-6,7-dihydro-1-indenyl)ZrCl₂
Dimethylsilandiylbis(2-isopropyl-4,5-dihydro-1-indenyl)ZrCl₂
Dimethylsilandiylbis(2-isopropyl-4,7-dihydro-1-indenyl)ZrCl₂
Dimethylsilandiylbis(2,5,6-trimethyl-4,7-dihydro-1-indenyl)ZrCl₂
Dimethylsilandiylbis(2,5-dimethyl-4,7-dihydro-1-indenyl)ZrCl₂
Dimethylsilandiylbis(2,6-dimethyl-4,7-dihydro-1-indenyl)ZrCl₂
Dimethylsilandiylbis(2-methyl-α-acenaphth-6,7-dihydro-1-indenyl)ZrCl₂
Dimethylsilandiylbis(2-ethyl-α-acenaphth-6,7-dihydro-1-indenyl)ZrCl₂
Dimethylsilandiylbis(2-isopropyl-α-acenaphth-6,7-dihydro-1-indenyl)ZrCl₂
Dimethylsilandiylbis(2,4,7-trimethyl-6,7-dihydro-1-indenyl)ZrCl₂
Dimethylsilandiylbis(2,4,7-trimethyl-4,7-dihydro-1-indenyl)ZrCl₂
Dimethylsilandiylbis(2,4,7-trimethyl-4,5-dihydro-1-indenyl)ZrCl₂

Die chiralen Metallocene werden als Racemat zur Herstellung von hochisotaktischen Polyolefinen eingesetzt. Verwendet werden kann aber auch die reine R- oder S-Form. Mit diesen reinen stereoisomeren Formen ist ein optisch aktives Polymeres herstellbar. Abgetrennt werden sollte jedoch die meso-Form der Metallocene, da das polymerisationsaktive Zentrum (das Metallatom) in diesen Verbindungen wegen Spiegelsymmetrie am Zentralmetall nicht mehr chiral ist und daher kein isotaktisches Polymeres erzeugen kann. Wird die meso-Form nicht abgetrennt, entsteht neben isotaktischen Polymeren auch ataktisches Polymer. Für bestimmte Anwendungen kann dies jedoch durchaus wünschenswert sein. Es kann somit auch eine rac/meso-Mischung des Metallocens der Formel I verwendet werden. Darüberhinaus sind auch Mischungen von Metallocenen der Formel I für einen Einsatz in der Polymerisation möglich und auch bevorzugt.
Die Trennung der Stereoisomere ist im Prinzip bekannt (H. H. Brintzinger et al., Journal of Organometallic Chemistry, 232 (1992) 233 und 328 (1987) 87).

Die Metallocene I können prinzipiell nach folgendem Reaktionsschema hergestellt werden: 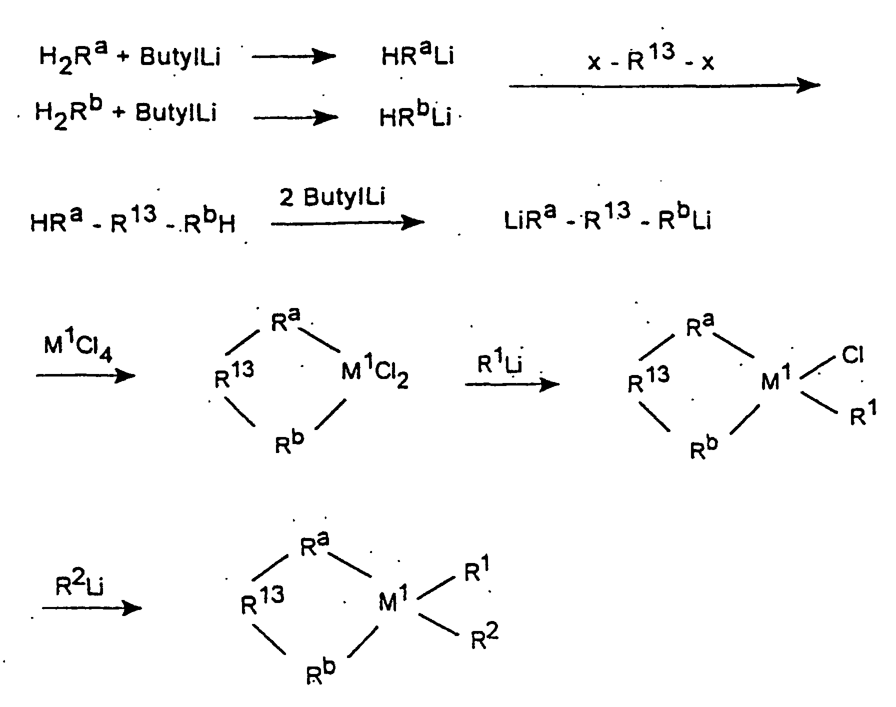 X = Cl, Br, I, o-Tosyl;

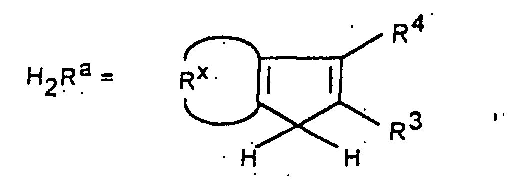

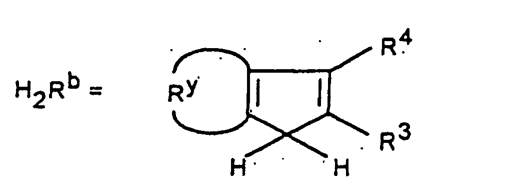

Diese Herstellung der Metallocenverbindungen ist aus EP-A-336 128 prinzipiell bekannt.

Alternativ bevorzugt werden.die Metallocene der Formel I zunächst mit ungesättigten Resten R^{x} und R^{y} aufgebaut und abschließend katalytisch teilhydriert. Ein Beispiel soll dies verdeutlichen, wobei der Aufbau des Metallocens der Formel I wie oben skizziert erfolgt. H₂R^{a} und H₂R^{b} sind dabei aber beispielsweise

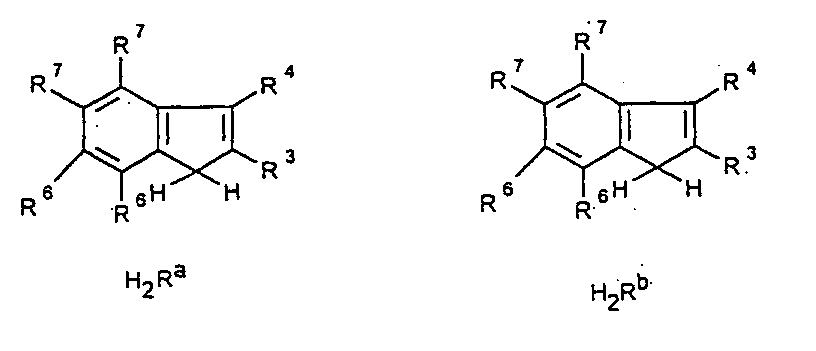

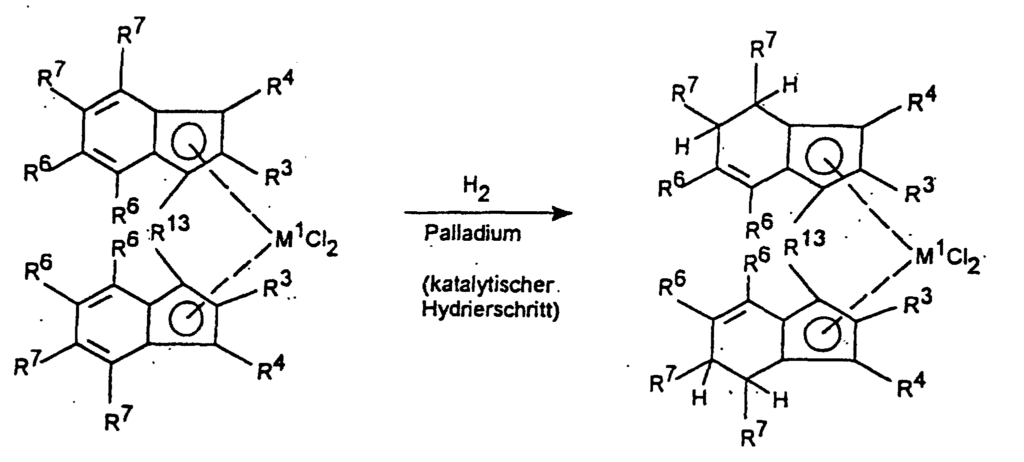

Der Hydrierschritt wird in wasserfreien Lösungsmitteln wie etwa Toluol, Xylol (als Isomerengemisch), o-Xylol, m-Xylol, p-Xylol, Mesitylen, Tetralin, Anisol, Cumol, 1,2-Diethylbenzol, 1,3-Diethylbenzol, 1,4-Diethylbenzol, 1-Ethyl-2-methylbenzol, 1-Ethyl-3-methylbenzol, 1-Ethyl-4-methylbenzol, bevorzugt sind Anisol, Toluol, Benzol, Xylole (als Gemisch oder Reinstoff) und Tetralin durchgeführt.

Ferner können auch sauerstoffhaltige aprotische Lösungsmittel wie etwa aromatische oder aliphatische Ether wie Anisol, Ethylphenylether, Isopropylphenylether, Diethylether, Di-n-butylether, tert-Butylmethylether, Tetrahydrofuran oder Dioxan verwendet werden. Daneben können auch Ester aliphatischer oder aromaischer Carbonsäuren als Lösungsmittel eingesetzt werden, beispielsweise Essigsäureethylester und Buttersäurepropylester.

Möglich ist auch der Einsatz von chlorierten Kohlenwasserstoffen als Lösungsmittel, wie beispielsweise Dichlormethan. Solche Lösungsmittel sind jedoch aus technischen und ökologischen Gründen weniger geeignet und somit weniger bevorzugt.

Der Hydrierschritt wird bei 0 bis 150°C, bevorzugt 15 bis 100°C durchgeführt.

Der Wasserstoffdruck beträgt 5 bis 200 bar, bevorzugt 10 bis 100 bar, insbesondere 10 bis 70 bar. Die Reaktionszeit beträgt 10 Minuten bis 24 h, bevorzugt 0,5 bis 15 h, insbesondere 1 bis 12 h. Als Gefäß für die Hydrierung können beispielsweise Stahlautoklaven verwendet werden. Als Hydrierkatalysatoren werden die für solche Reaktionen in der Literatur beschriebenen Verbindungen wie etwa Platin, Platinoxid, Palladium oder andere übliche Übergangsmetallkatalysatoren verwendet. Insbesondere kommen als Hydrierkatalysatoren solche Verbindungen oder Elemente in Frage, die unter den angewendeten Hydrierbedingungen das Lösungsmittel nicht oder nur teilweise hydrieren. Beispiele für solche Hydrierkatalysatoren sind Palladium auf Aktivkohle, Palladium auf Bariumsulfat, Palladium auf Aluminiumoxid, Palladiumschwarz, Palladiumschwamm, Platinoxid, Platinschwarz, Platinschwamm. Bevorzugt werrden Palladiumkatalysatoren, insbesondere Palladium auf Aktivkohle verwendet. Die so erhaltenen Halogenderivate (R¹ =R²= Halogen, beispielsweise Cl) können nach dem oben skizzierten Verfahren mit R¹Li und/oder R²Li mit R¹,R² = Alkyl, Aryl oder beispielsweise Alkenyl in die entsprechenden Alkyl-, Aryl- oder beispielsweise Alkenylderivate der Formel I umgewandelt werden.

Die Metallocene der Formel I können als Katalysatorkomponente in der Olefinpolymerisation eingesetzt werden. Dabei wird mindestens ein Metallocen der Formel I verwendet, sowie ein Cokatalysator, der bevorzugt eine Aluminium- oder eine Borverbindung ist. Insbesondere wird als Cokatalysator ein Aluminoxan, z.B. der Formel II und/oder III verwendet, wobei n eine ganze Zahl von 0-50, bevorzugt 10-35, bedeutet.

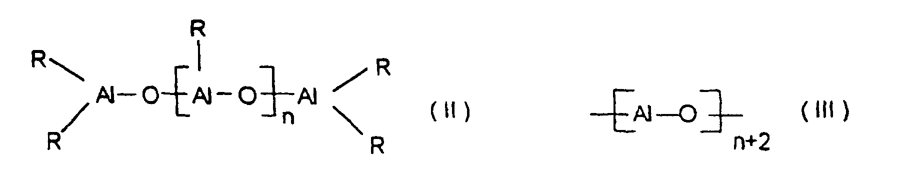

Generell sind die Reste R gleich oder verschieden und bedeuten eine C₁-C₆-Alkylgruppe, eine C₁-C₆-Fluoralkylgruppe, eine C₈-C₁₈-Alkylgruppe, eine C₆-C₁₈-Fluoralkylgruppe, Wasserstoff oder Halogen.

Bevorzugt sind die Reste R gleich und bedeuten Methyl, Isobutyl, Phenyl oder Benzyl, besonders bevorzugt Methyl.

Sind die Reste R unterschiedlich, so sind sie bevorzugt Methyl und Wasserstoff oder alternativ Methyl und Isobutyl, wobei Wasserstoff bzw. Isobutyl bevorzugt zu 0,01-40 % (Zahl der Reste R) enthalten sind. Statt des Aluminoxans kann bei der Polymerisation als Cokatalysator eine Mischung bestehend aus Aluminoxan und AlR₃ verwendet werden, wobei R die oben angeführte Bedeutung hat.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen R werden entsprechend der gewünschten Zusammensetzung zwei verschiedene Aluminiumtrialkyle (AlR₃ + AlR'₃) mit Wasser umgesetzt (vgl. S. Pasynkiewicz, Polyhedron 9 (1990) 429 und EP-A-302 424).

Die genaue räumliche Struktur der Aluminoxane II und III ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die Metallocene vor dem Einsatz in der Polymerisationsreaktion jeweils getrennt oder zusammen als Mischung mit einem Aluminoxan der Formel (II) und/oder (III) vorzuaktivieren. Dadurch wird die Polymerisationsaktivität deutlich erhöht und die Kornmorphologie des Polymers verbessert.

Die Voraktivierung der Metallocene wird in Lösung vorgenommen. Bevorzugt werden dabei die Metallocene als Feststoff in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol oder ein C₆-C₁₀-Kohlenwasserstoff verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Die Metallocene können in der gleichen Konzentration eingesetzt werden, vorzugsweise werden sie jedoch in einer Menge von 10⁻⁴ - 1 mol pro mol Aluminoxan eingesetzt. Die Voraktivierungszeit beträgt 1 Minute bis 60 Stunden, vorzugsweise 5 bis 60 Minuten. Man arbeitet bei einer Temperatur von -78 °C bis 100 °C, vorzugsweise 0 °C bis 70 °C.

Die Metallocene können auch vorpolymerisiert oder auf einen Träger aufgebracht werden. Zur Vorpolymerisation wird bevorzugt, das (oder eines der) in der Polymerisation eingesetzte(n) Olefin(e) verwendet, es kann aber auch ein anderes Olefin verwendet werden.

Geeignete Träger sind beispielsweise Silikagele, Aluminiumoxide, festes Aluminoxan, Kombinationen von Aluminoxan auf einem Träger wie beispielsweise Silikagel oder andere anorganische Trägermaterialien. Ein geeignetes Trägermaterial ist auch ein Polymerpulver, bevorzugt Polyolefinpulver in feinverteilter Form.

Die erfindungsgemäßen Metallocene der Formel (I) können auch als Mischung mit bekannten Metallocenen verwendet werden. Solche Mischungen enthalten dabei neben den erfindungsgemäßen Metallocenen der Formel I bevorzugt Bisindenylzirkonocene, bei denen der Indenylligand in 2-, 2,4-, 2,4,5-, 2,4,5,6-, 2,5-, 2,6-, 2,5,6- oder 2,4,7-Stellung mit einem Alkyl- oder Arylrest substituiert oder anelliert ist.

Eine weitere mögliche Ausgestaltung des erfindungsgemäßen Verfahrens besteht darin, daß man an Stelle oder neben eines Aluminoxans eine borhaltige salzartige Verbindung der Formel RₓNH₄₋ₓBR'₄ oder der Formel R₃PHBR'₄ als Cokatalysator verwendet. Dabei sind x= 1,2 oder 3, R= Alkyl oder Aryl, gleich oder verschieden, und R' = Aryl, das auch fluoriert oder teilfluoriert sein kann. In diesem Fall besteht der Katalysator aus dem Reaktionsprodukt der Metallocene mit einer der genannten Verbindungen (vgl. EP-A-277 004).

Zur Entfernung von im Olefin vorhandener Katalysatorgifte ist eine Reinigung mit einem Aluminiumalkyl, beispielsweise Al(i-Butyl)₃, AlMe₃ oder AlEt₃ vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder abgetrennt.

Die Polymerisation kann eine Homo- oder Copolymerisation sein und kann in bekannter Weise in Lösung, in Suspension oder in der Gasphase, kontinuierlich oder diskontinuierlich, ein- oder mehrstufig bei einer Temperatur von vorzugsweise 0 bis 200 °C, insbesondere 20 bis 100 °C, durchgeführt werden. Polymerisiert werden Olefine, bevorzugt der Formel R^{c}-CH=CH-R^{d}. In dieser Formel sind R^{c} und R^{d} gleich oder verschieden und bedeuten ein Wasserstoffatom oder einen C₁-C₂₀-Kohlenwasserstoffrest, z.B. einen Alkylrest mit 1 bis 14 C-Atomen. R^{c} und R^{d} können auch mit den sie verbindenden C-Atomen einen Ring bilden. Beispiele für Olefine entsprechend der Formel R^{c}-CH = CH-R^{d} sind Ethylen, Propylen, 1-Buten, 1-Hexen, 4-Methyl-1-penten, 1-Octen, Norbornen Ethylidennorbornen oder Norbornadien. Insbesondere werden Propylen und Ethylen oder Hexen polymerisiert. Bei der Polymerisation von Ethylen oder der Copolymerisation von Ethylen mit einem oder mehreren Comonomeren obiger Bedeutung ist ein Metallocen der allgemeinen Formel (I) mit z = 0 bevorzugt. Bei der Polymerisation höherer Olefine wie Propylen mit untergeordneten Mengen Ethylen ist ein Metallocen der allgemeinen Formel (I) mit z = 1 bevorzugt. Als Molmassenregler wird, falls erforderlich, Wasserstoff zugegeben.

Der Gesamtdruck im Polymerisationssystem beträgt 1 bis 1000 bar. Bevorzugt ist die Polymerisation in dem technisch besonders interessanten Druckbereich von 5 bis 64 bar.

Dabei werden die Metallocene in einer Konzentration, bezogen auf das Übergangsmetall, von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminoxan oder die Mischung Aluminoxan/AlR₃ wird in einer Konzentration von 10⁻⁵ bis 10⁻¹ mol, vorzugsweise 10⁻⁴ bis 10⁻² mol pro dm³ Lösemittel bzw. pro dm³ Reaktorvolumen verwendet. Prinzipiell sind aber auch andere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff, als solcher sei beispielsweise Butan, Pentan, Hexan, Heptan, Decan, Isooctan, Cyclohexan, Methylcyclohexan, genannt.

Weiterhin kann eine Benzin- oder hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Das Verfahren zeichnet sich dadurch aus, daß mit den beschriebenen Metallocenen im technisch besonders interessanten Temperaturbereich zwischen 40 und 80°C mit sehr hoher Polymerisationsaktivität Polymere mit hoher Molmasse von M_{w} > 100 000 g/mol und abgesenktem Polymerschmelzpunkt hergestellt werden können. Durch Regelung mit größeren Mengen Wasserstoff während der Polymerisation sind mit sehr hoher Katalysatoraktivität auch Polymerwachse herstellbar.

Die vorliegende Erfindung wird anhand der folgenden Beispiele näher erläutern.

### Beispiele

Es bedeuten:
- VZ =: Viskositätszahl in cm³/g
- M_{w} =: Molmassengewichtsmittel in g/mol (ermittelt durch Gelpermeationschromatographie)
- M_{w}/Mₙ =: Polydispersität (ermittelt durch Gelpermeationschromatographie)
Schmelzpunktbestimmung mittels DSC (20°C/min)
- n_{PE} =: mittlere Blocklänge "Polyethylen" in der Polymerkette (ermittelt mit ¹³C-NMR)

### Metallocen-Synthesen

### Beispiel 1

4,0 g (9,0 mmol) rac-Dimethylsilandiylbis(2-methyl-4,5-benzindenyl)-zirkoniumdichlorid und 0,3 g (0,28 mmol) Palladium (10 %ig auf Aktivkohle) wurden in 100 ml Toluol suspendiert und bei 70°C und einem Wasserstoffdruck von 30 bar hydriert. Nach 6 Stunden wurde die Reaktionsmischung heiß filtriert, mit 2000 ml heißem Toluol extrahiert und auf 300 ml eingeengt. Bei 0-5°C kristallisierte das teilhydrierte Produkt rac-Dimethylsilandiylbis(2-methyl-6,7-dihydro-4,5-benzindenyl)-zirkoniumdichlorid aus. Ausbeute: 2,6 g (4,5 mmol; 50 %). ¹H-NMR (300 MHz, CDCl₃): d = 7,42 (m, 2 H); 7,3-7,14 (m, 4 H); 7,2 (m, 2 H); 6,96 (s, 2 H); 2,82 (m, 4 H); 2,25 (s, 6 H); 1,02 (s, 6 H).

### Beispiel 2

4,0 g (6,4 mmol) rac-Dimethylsilandiylbis(2-methyl-4-phenylindenyl)-zirkoniumdichlorid und 0,3 g (0,28 mmol) Palladium (10 %ig auf Aktivkohle) wurden in 100 ml Toluol suspendiert und bei 70°C und einem Wasserstoffdruck von 50 bar hydriert. Nach 6 Stunden wurde die Reaktionsmischung heiß filtriert, mit 1600 ml heißem Toluol extrahiert und auf 180 ml eingeengt. Bei 0-5°C kristallisierte das teilhydrierte Produkt rac-Dimethylsilandiylbis(2-phenyl-6,7-dihydroindenyl)-zirkoniumdichlorid aus. Ausbeute: 1,9 g (3,0 mmol; 47 %).

### Beispiel 3

4,0 g (7,3 mmol) rac-1,2-Ethandiylbis(2-methyl-4,5-benzindenyl)-zirkoniumdichlorid und 0,3 g (0,28 mmol) Palladium (10 %ig auf Aktivkohle) wurden in 100 ml Toluol suspendiert und bei 70°C und einem Wasserstoffdruck von 30 bar hydriert. Nach 6 Stunden wurde die Reaktionsmischung heiß filtriert, mit 1800 ml heißem Toluol extrahiert und auf 220 ml eingeengt. Bei 0-5°C kristallisierte das teilhydrierte Produkt rac-1,2-Ethandiylbis(2-methyl-6,7-dihydro-4,5-benzindenyl)-zirkoniumdichlorid aus. Ausbeute: 2,9 g (5,3 mmol; 72 %).

### Polymerisationsbeispiele

### Beispiel 4

Ein trockener 24 dm³-Reaktor, der zunächst mit Stickstoff und anschließend mit Propen gespült worden war, wurde mit 12 dm³ flüssigem Propen gefüllt. Dann wurden 35 cm³ toluolische Methylaluminoxanlösung (entsprechend 52 mmol Al, mittlerer Oligomerisierungsgrad n =20) zugegeben und der Ansatz bei 30°C 5 Minuten gerührt. Parallel dazu wurden 1 mg Dimethylsilandiylbis(2-methyl-4,5-benzo-6,7-dihydro-1-indenyl)zirkoniumdichlorid (Verhältnis rac:meso > 20) in 13,5 cm³ toluolischer Methylaluminoxanlösung (entsprechend 20 mmol Al) gelöst und 5 Minuten bei 40°C voraktiviert. Die Lösung wurde dann in den Reaktor eingespritzt und das Polymerisationssystem nach Aufheizung (innerhalb von 5 Minuten) auf 70°C eine Stunde durch Kühlungbei dieser Temperatur gehalten. Durch Zugabe von CO₂-Gas wurde dann die Polymerisation beendet, überschüssiges Propen abgegast und das Polymer 12 Stunden bei 80°C im Hochvakuum getrocknet. Es wurden 1,84 kg Polymer, entsprechend einer Metallocenaktivitätvon 1840 kg Polypropylen / g Metallocen x h Polymerisationsdauer erhalten. Das Polymer wies folgende Eigenschaften auf: VZ = 127 cm³/g; M_{w} = 140000 g/mol, M_{w}/Mₙ = 2,1; Schmelzpunkt: 142°C.

### Beispiel 5

Beispiel 4 wurde bei 50°C Polymerisationstemperatur wiederholt. Es wurden 0,75 kg Polymer erhalten, die Metallocenaktivitätwar somit 750 kg PP / g Metallocen x h. VZ = 189 cm³/g; M_{w} = 232000 g/mol, M_{w}/Mₙ = 2,3; Schmelzpunkt: 141°C.

### Vergleichsbeispiele 1 und 2

Die Beispiele 4 und 5 wurden mit dem Metallocen Dimethylslandiylbis(2-methyl-4,5-benzo-1-indenyl)zirkondichlorid (Verhältnis rac:meso > 20) wiederholt. Vergleichsbeispiel 1 entspricht dabei der Polymerisationstemperatur von 70°C und Vergleichsbeispiel 2 der Polymerisationstemperatur von 50°C.

### Ergebnisse Vergleichsbeispiel 1

Es wurden 0,61 kg Polymer, entsprechend einer Metallocenaktivität von 610 kg PP/g Metallocen x h erhalten. VZ = 296 cm³/g; M_{w} = 358500 g/mol, M_{w}/Mₙ = 2,0; Schmelzpunkt: 151°C.

### Ergebnisse Vergleichsbeispiel 2

Es wurden 0,27 kg Polymer, entsprechend einer Metallocenaktivität von 270 kg PP/g Metallocen x h erhalten. VZ = 504 cm³/g; M_{w} = 699500 g/mol, M_{w}/Mₙ = 2,1; Schmelzpunkt: 153°C.

### Beispiel 6

Ein trockener 24 dm³-Reaktor, der zunächst mit Stickstoff und anschließend mit Propen gespült worden war, wurde mit 60 Ndm³ Wasserstoff und 12 dm³ flüssigem Propen gefüllt. Dann wurden 35 cm³ toluolische Methylaluminoxanlösung (entsprechend 52 mmol Al, mittlerer Oligomerisierungsgrad n =20) zugegeben und der Ansatz bei 30°C 5 Minuten gerührt. Parallel dazu wurden 0,5 mg Dimethylsilandiylbis(2-methyl-4,5-benzo-6,7-dihydro-1-indenyl)zirkoniumdichlorid (Verhältnis rac:meso > 20) in 13,5 cm³ toluolischer Methylaluminoxanlösung (entsprechend 20 mmol Al) gelöst und 5 Minuten bei 40°C voraktiviert. Die Lösung wurde dann in den Reaktor eingespritzt und das Polymerisationssystem nach Aufheizung (innerhalb von 5 Minuten) auf 70°C eine Stunde durch Kühlungbei dieser Temperatur gehalten. Durch Zugabe von CO₂-Gas wurde dann die Polymerisation beendet, überschüssiges Propen abgegast und das Polymer 12 Stunden bei 80°C im Hochvakuum getrocknet. Es wurden 2,13 kg Polymer, entsprechend einer Metallocenaktivitätvon 4260 kg Polypropylen / g Metallocen x h Polymerisationsdauer erhalten. Das Polymerwachs wies folgende Eigenschaften auf: VZ = 30 cm³/g; M_{w} = 187000 g/mol, M_{w}/Mₙ = 2,0; Schmelzpunkt: 142°C.

### Beispiel 7

Beispiel 6 wurde bei 50°C Polymerisationstemperatur wiederholt. Es wurden 0,88 kg Polymer erhalten, die Metallocenaktivität war somit 1760 kg PP/g Metallocen x h. VZ = 41 cm³/g; M_{w} = 346000 g/mol, M_{w}/Mₙ = 2,4; Schmelzpunkt: 139°C.

### Vergleichsbeispiel 3

Beispiel 7 wurde mit dem Metallocen Dimethylsilandiylbis(2-methyl-4,5-benzo-1-indenyl)zirkondichlorid (Verhältnis rac:meso > 20) wiederholt. Es wurden 0,38 kg Polymer erhalten, die Metallocenaktivität war somit 760 kg PP/g Metallocen x h. VZ = 31 cm³/g; M_{w} = 285000 g/mol, M_{w}/Mₙ = 2,7; Schmelzpunkt: 150°C.

### Beispiel 8

Beispiel 4 wurde mit dem Metallocen-1,2-ethandiylbis(2-methyl-4,5-benzo-6,7-dihydro-1-indenyl)zirkondichlorid (Verhältnis rac:meso > 20) wiederholt. Es wurden 2,24 kg Polymer, entsprechend einer Metallocenaktivität von 2240 kg Polypropylen / g Metallocen x h Polymerisationsdauer erhalten. Das Polymer wies folgende Eigenschaften auf: VZ = 117 cm³/g; M_{w} =142500 g/mol, M_{w}/Mₙ = 2,4; Schmelzpunkt: 143°C.

### Beispiel 9

Beispiel 4 wurde mit dem Metallocen Dimethylsilandiylbis(2-methyl-4-phenyl-6,7-dihydro-1-indenyl)zirkondichlorid (Verhältnis rac:meso > 20) wiederholt. Es wurden 1,64 kg Polymer, entsprechend einer Metallocenaktivität von 1640 kg Polypropylen / g Metallocen x h Polymerisationsdauer erhalten.

### Vergleichsbeispiel 4

Beispiel 9 wurde mit dem Metallocen Dimethylsilandiylbis(2-methyl-4-phenyl-1-indenyl)zirkondichlorid (Verhältnis rac:meso > 20) wiederholt. Es wurden 1,05 kg Polymer, entsprechend einer Metallocenaktivität von 1050 kg Polypropylen / g Metallocen x h Polymerisationsdauer erhalten.

### Beispiel 10

Beispiel 4 wurde mit dem Metallocen Dimethylsilandiylbis(2,5,6-trimethyl-4,7-dihydro-1-indenyl)zirkondichlorid (Verhältnis rac:meso > 20) wiederholt. Es wurden 0,18 kg Polymer, entsprechend einer Metallocenaktivität von 180 kg Polypropylen / g Metallocen x h Polymerisationsdauer erhalten.

### Vergleichsbeispiel 5

Beispiel 10 wurde mit dem Metallocen Dimethylsilandiylbis(2,5,6-trimethyl-1-indenyl)zirkondichlorid (Verhältnis rac:meso > 20) wiederholt. Es wurden 0,045 kg Polymer, entsprechend einer Metallocenaktivität von 45 kg Polypropylen / g Metallocen x h Polymerisationsdauer erhalten.

### Vergleichsbeispiel 6

Beispiel 10 wurde mit dem Metallocen Dimethylsilandiylbis(4,7-dimethyl-1-indenyl)zirkondichlorid (Verhältnis rac:meso > 20) wiederholt. Es wurden 0,27 kg Polymer, entsprechend einer Metallocenaktivität von 270 kg Polypropylen / g Metallocen x h Polymerisationsdauer erhalten.

### Vergleichsbeispiel 7

Beispiel 10 wurde mit dem Metallocen Dimethylsilandiylbis(4,7-dimethyl-4,5,6,7-tetrahydro-1-indenyl)zirkondichlorid (Verhältnis rac:meso > 20) wiederholt. Es wurden 0,16 kg Polymer, entsprechend einer Metallocenaktivität von 160 kg Polypropylen / g Metallocen x h Polymerisationsdauer erhalten.

### Beispiel 11

Ein trockener 24 dm³-Reaktor, der zunächst mit Stickstoff und anschließend mit Propen gespült worden war, wurde mit 12 dm³ flüssigem Propen gefüllt. Dann wurden 35 cm³ toluolische Methylaluminoxanlösung (entsprechend 52 mmol Al, mittlerer Oligomerisierungsgrad n =20) zugegeben und der Ansatz bei 30°C 5 Minuten gerührt. Parallel dazu wurden 1 mg Dimethylsilandiylbis(2-methyl-4,5-benzo-6,7-dihydro-1-indenyl)zirkoniumdichlorid (Verhältnis rac:meso > 20) in 13,5 cm³ toluolischer Methylaluminoxanlösung (entsprechend 20 mmol Al) gelöst und 5 Minuten bei 40°C voraktiviert. Die Lösung wurde dann in den Reaktor eingespritzt und das Polymerisationssystem nach Aufheizung (innerhalb von 3 Minuten) auf 50°C eine Stunde durch Kühlung bei dieser Temperatur gehalten. Während der Polymerisation wurden 50 g Ethylen gleichmäßig in den Reaktor dosiert. Durch Zugabe von CO₂-Gas wurde dann die Polymerisation beendet, überschüssiges Monomer abgegast und das Polymer 12 Stunden bei 80°C im Hochvakuum getrocknet. Es wurden 0,97 kg Polymer, entsprechend einer Metallocenaktivität von 970 kg Copolymer / g Metallocen x h Polymerisationsdauer erhalten. Das Cpolymer hatte einen Gehalt von 3,1 Gew.-% Ethylen, das Ethylen war statisch eingebaut (NMR-Spektroskopie, n_{PE} ca. 1,1) und der Schmelzpunkt war 129°C.

### Beispiel 12

Ein trockener 150 dm³-Reaktor wurde mit Stickstoff gespült und bei 20°C mit 80 dm³ eines Benzinschnitts mit dem Siedebereich 100-200°C gefüllt. Dann wurde der Gasraum durch 5maliges Aufdrücken von 2 bar Propen und Entspannen Stickstoff-frei gespült. Nach Zugabevon 50 dm³ flüssigem Propen wurden 20 cm³ toluolische Methylaluminoxanlösung (entsprechend 100 mmol Al, Molmasse nach kryoskopischer Bestimmung 970 g/mol) zugegeben und der Reaktorinhalt auf 50°C aufgeheizt. Durch Zudosierungvon Wasserstoff wurde ein Wasserstoffgehalt im Gasraum des Reaktors von 0,1 % eingestellt und später dann während der 1. Polymerisationsstufe durch Nachdosierung konstant gehalten. 8 mg Dimethylsilandiylbis(2-methyl-4,5-benzo-6,7-dihydro-1-indenyl)-zirkondichlorid (Verhältnis rac:meso > 20) in 32 cm³ toluplischer Methylaluminoxanlösung (entsprechend 50 mmol Al) gelöst und nach 10 Minuten inden Reaktor gegeben. Die Polymerisation erfolgte nun in einer 1. Polymerisationsstufe bei 55°C 4 h lang. Danach wurde auf2 bar Reaktordruck abgegast und 2 kg Ethylengas zugeführt. Der Reaktordruck stieg dabei auf 7,3 bar an, und bei 45°C wurden 8 h abpolymerisiert, bevor die Reaktion mit CO₂-Gas gestoppt wurde. Es wurden 17,8 kg Blockcopolymerisat erhalten, entsprechend einer Metallocenaktivität von 185,4 kg Polymer / g Metallocen x h. Das Polymer wurde fraktioniert. Das Homopolymer der 1. Polymerisationsstufe wies einen Schmelzpunkt von 142°C auf, der in der 2. Polymerisationsstufe hergestellte EPM-Rubber hatte eine Glastemperatur von - 52°C, einen Ethylengehalt von 46 Gew.-% und einen Anteil am gesamten Blockcopolymer von 22 Gew.-%.

### Beispiel 13

### Darstellung des geträgerten Metallocen-Katalysators:

142 mg (0,24 mmol) rac-Dimethylsilandiylbis(2-methyl-4,5-benzo-6,7-dihydro-1-indenyl)zirkoniumdichlorid wurden in 8,9 ml (41 mmol) 30 %iger toluolischer MAO-Lösung (Albemarle) gelöst. Der Ansatz wurde bei Raumtemperatur über Nacht lichtgeschützt stehen gelassen. Anschließend wurde die Metallocen-MAO-Lösung mit 7,1 ml Toluol verdünnt. In einem weiten Gefäß (Becherglas, Rührschüssel) wurde 8 g Kieselgel Typ MS 948 von Grace Davison (calciniert bei 600°C) vorgelegt und unter Rühren portionsweise mit der verdünnten Metallocen-MAO-Lösung versetzt (125 % Füllung des Porenvolumens). Nach vollständiger Zugabe wurde der Ansatz noch etwa 10 min gerührt. Das Lösemittel wurde am Vakuum entfernt und der Kontakt bis zu einer Restfeuchte von max. 5 Gew.-% getrocknet.Es resultierten 11,65 g eines orangefarbenen, frei fließenden Pulvers, das laut Elementaranalyse 0,19 % Zr und 9,5 % Al enthielt.

### Polymerisation:

Ein trockener 16 dm³-Reaktor, der zunächst mit Stickstoff und anschließend mit Propen gespült worden war, wurde mit 10 dm³ flüssigem Propen und 2 Ndm³ Wasserstoff gefüllt. Als Scavenger wurden 8 ml 20 %iger Triethylaluminium-Lösung in Varsol (Witco) zugesetzt und der Ansatz 15 min bei 30°C gerührt. Anschließend wurde eine Suspensionvon 0,5 g des geträgerten Metallocen-Katalysators in 20 ml Exxsol in den Reaktor gegeben, auf die Polymerisationstemperatur von 65°C aufgeheizt und das Polymerisationssystem 1 h bei 65°C gehalten. Die Polymerisation wurde durch Abgasen des überschüssigen Monomers gestoppt und das erhaltene Polymer im Vakuum getrocknet. Es resultierten 2,3 kg Polypropylen-Pulver. Die Katalysatoraktivität betrug 220 kg PP / (mmol Zr x h) oder 4,6 kg PP / (g Kat x h). Das dargestellte isotaktische Polypropylen wies die folgenden Eigenschaften auf: Smp. 138°C; M_{w} = 138000; M_{w}/Mₙ = 2,6; VZ = 163 cm³/g; SD = 470 g/dm³; d₅₀ = 950µm.

### Beispiel 14

Beispiel 4 wurde mit dem Metallocen Dimethylsilandiylbis(2-methyl-αacenaphth-6,7-dihydro-1-indenyl)ZrCl₂ (siehe Abbildung) (Verhältnis rac:meso > 17) wiederholt. Die Metallocenaktivität war 1930 kg Polypropylen / g Metallocen x h Polymerisationsdauer. Das Polymer wies folgende Eigenschaften auf: VZ = 157 cm³/g; M_{w} = 172500 g/mol, M_{w}/Mₙ = 2,2; Schmelzpunkt: 143°C.

### Abbildung des Metallocens von Beispiel 14

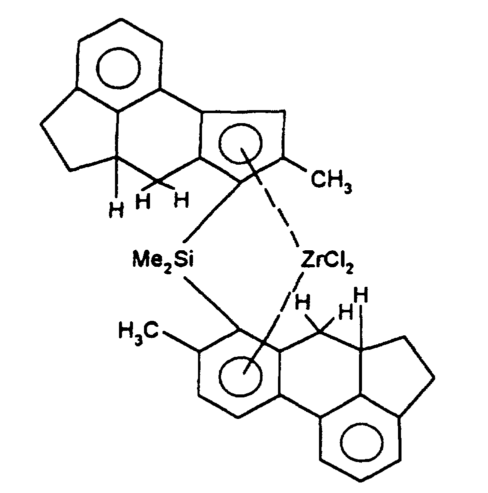

### Beispiel 15

Beispiel 13 wurde mit einer Metallocenmischung, bestehend aus 71 mg des erfindungsgemäßen Metallocens rac-Dimethylsilandiylbis(2-methyl-4,5-benzo-6,7-dihydro-1-indenyl)zirkoniumdichlorid und 75 mg des bekannten Metallocens rac-Dimethylsilandiylbis(2-methyl-4-phenyl-1-indenyl)zirkoniumdichlorid durchgeführt. Die Katalysatoraktivität betrug 198 kg PP / (mMol Zirkon x h) oder 4 kg PP / (g Kat x h).

## Patentansprüche

1. Metallocen der allgemeinen Formel I 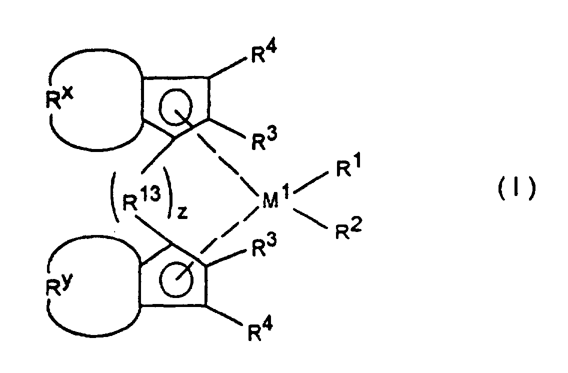 worin
M¹ ein Metall der Gruppe IVb, Vb oder Vlb des Periodensystems ist,
R¹ und R² gleich oder verschieden sind und ein Wasserstoffatom, eine C₁-C₄₀-kohlenstoffhaltige Gruppe wie eine C₁-C₁₀-Alkyl-, eine C₁-C₁₀-Alkoxy-, eine C₆-C₁₀-Aryl-, eine C₆-C₁₀-Aryloxy- eine C₂-C₁₀-Alkenyl-, eine C₇-C₄₀-Arylalkyl-, eine C₇-C₄₀-Alkylaryl- oder eine C₈-C₄₀-Arylalkenylgruppe, eine OH-Gruppe oder ein Halogenatom bedeuten,
R³ und R⁴ jeweils gleich oder verschieden sind und ein Wasserstoffatom, ein Halogenatom, eine C₁-C₂₀-Kohlenwasserstoffgruppe wie eine C₁-C₁₀-Alkylgruppe, eine C₂-C₁₀-Alkenylgruppe oder eine C₆-C₁₀-Arylgruppe, einen NR¹⁶₂-, SR¹⁶-, OSiR¹⁶₃-, SiR¹⁶₃- oder PR¹⁶₂-Rest, worin R¹⁶ ein Halogenatom, eine C₁-C₁₀-Alkylgruppe oder eine C₆-C₁₀-Arylgruppe ist, bedeuten,
R¹³ eine Verbrückung ist wie 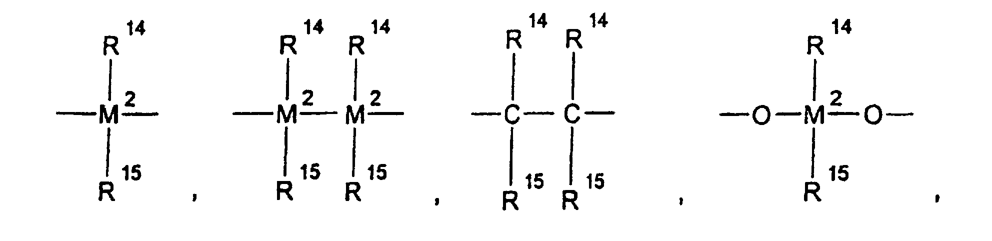 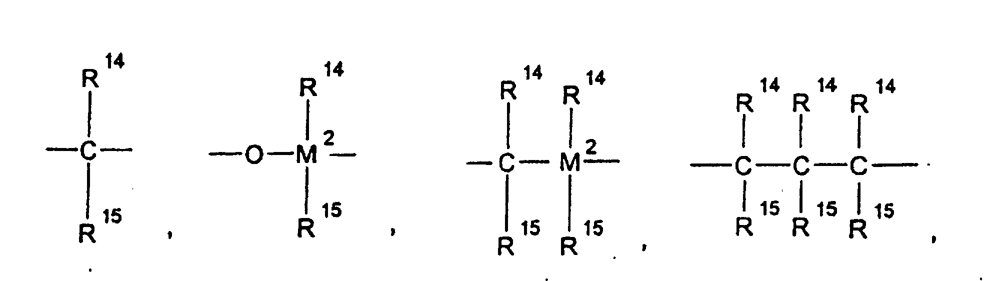 =BR¹⁴, = AIR¹⁴, -Ge-, -O-, -S-, =SO, =SO₂, =NR¹⁴, =CO, =PR¹⁴ oder =P(O)R¹⁴ ist, wobei R¹⁴ und R¹⁵ jeweils gleich oder verschieden sind und ein Wasserstoffatom, ein Halogenatom, oder eine C₁-C₄₀-kohlenstoffhaltige Gruppe, wie eine Si(C₁-C₁₀-alkyl)₃-Gruppe, eine Si(C₆-C₂₀-aryl)₃-Gruppe, eine N(C₁-C₁₀-alkyl)₂-Gruppe, eine N(C₆-C₂₀-aryl)₂-Gruppe, eine B(C₁-C₁₀-alkyl)₂₋Gruppe, eine B(C₆-C₂₀-aryl)₂-Gruppe, eine C₁-C₁₀-Alkylgruppe, eine C₁-C₁₀-Fluoralkylgruppe, eine C₆-C₂₀-Arylgruppe, eine C₆-C₂₀-Fluorarytgruppe. eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁴ und R¹⁵ jeweils mit den sie verbindenden Atomen ein Ringsystem bilden, M² Silizium, Germanium oder Zinn ist und
z 0 oder 1 ist,
R^{x} und R^{y} gleich oder verschieden sind und eine viergliedrige Gruppe darstellen 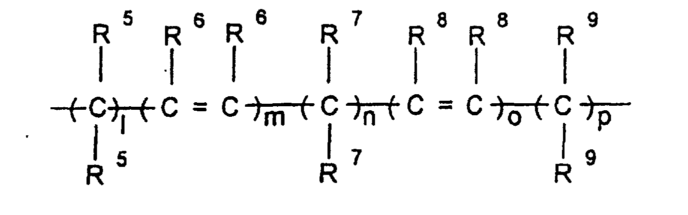
wobei
R⁵,R⁶,R⁷,R⁸ und R⁹ jeweils gleich oder verschieden sind und ein Wasserstoffatom, ein Halogenatom, oder eine C₁-C₄₀-kohlenstoffhaltige Gruppe, wie eine Si(C₁-C₁₀-alkyl)₃-Gruppe, eine Si(C₆-C₂₀-aryl)₃-Gruppe, eine N(C₁-C₁₀-alkyl)₂-Gruppe, eine N(C₆-C₂₀-aryl)₂-Gruppe, eine B(C₁-C₁₀-alkyl)₂-Gruppe, eine B(C₆-C₂₀-aryl)₂-Gruppe, eine C₁-C₁₀-Alkylgruppe, eine C₁-C₁₀-Fluoralkylgruppe, eine C₆-C₂₀-Arylgruppe, eine C₆-C₂₀-Fluorarylgruppe, eine C₁-C₁₀-Alkoxygruppe. eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder jeweils zwei Reste R⁵,R⁶, R⁷, R⁸ und R⁹ mit den sie verbindenden Atomen ein Ringsystem bilden, und
l+n+p = 2 und m+o = 1 ist, z.B.
l = 1, m = 1, n = 1, o und p= 0 oder
l = 2, m = 1, n, o und p = 0 oder
l = 0, m 1, n = 2, o und p = 0.

2. Metallocen der allgemeinen Formel I nach Anspruch 1. wobei
M¹ Zirkonium oder Hafnium ist,
R¹ und R² gleich sind und ein Halogenatom oder eine C₁-C₄-Alkylgruppe bedeuten,
R³ gleich sind und eine C₁-C₄-Alkylgruppe bedeuten,
R⁴ gleich sind und ein Wasserstoff bedeuten,
R¹³ 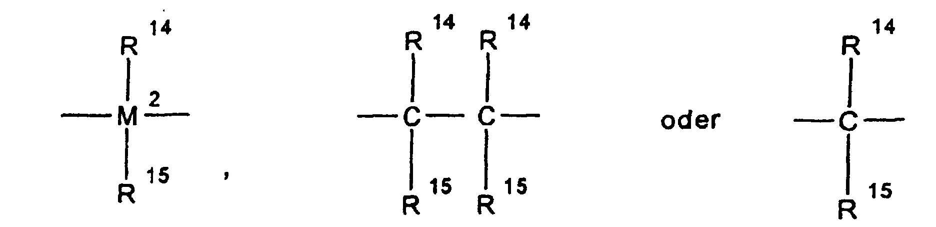
ist, wobei
M² Silizium oder Germanium ist, R¹⁴ und R¹⁵ gleich oder verschieden sind und eine C₁-C₁₀-Alkyl- oder C₆-C₁₀-Arylgruppe sind, z gleich 1 ist und
R^{x} und R^{y} gleich sind.

3. Metallocen der allgemeinen Formel I nach Anspruch 1 oder 2, das ein Bisindenylzirkonocen ist, das mindestens in einem Sechsring teilhydriert ist.

4. Verfahren zur Herstellung eines Metallocens der allgemeinen Formel I gemäß Anspruch 1 **dadurch gekennzeichnet, daß** die Metallocene der Formel I nach folgendem Reaktionsschema hergestellt werden: 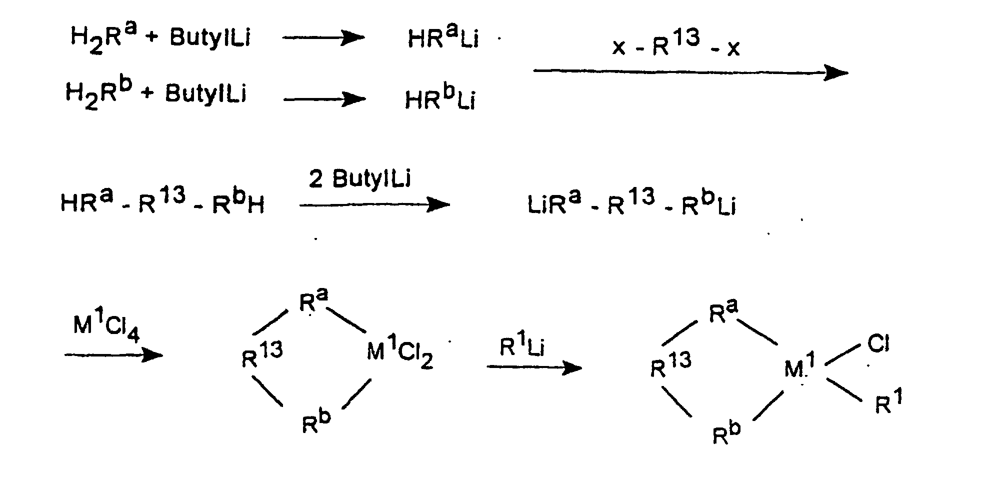 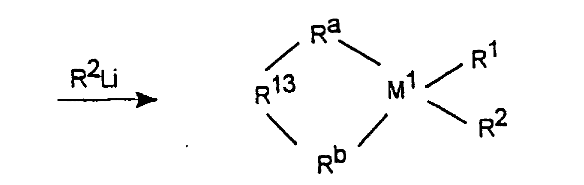 X = Cl, Br, I, o-Tosyl; 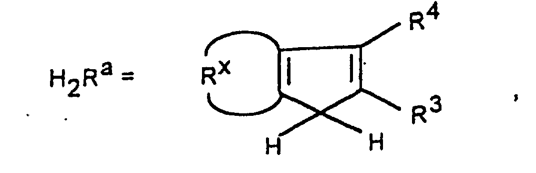 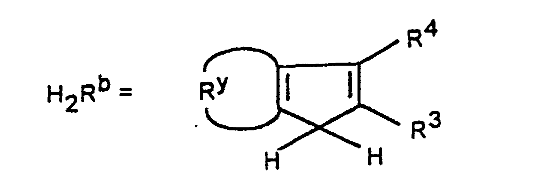 , oder daß die Metallocene der Formel I zunächst mit ungesättigten Resten R^{x} und R^{y} aufgebaut und anschließend katalytisch teilhydriert werden, wobei der Aufbau des Metallocens wie oben skizziert erfolgt, wobei H₂R^{a} und H₂R^{b} 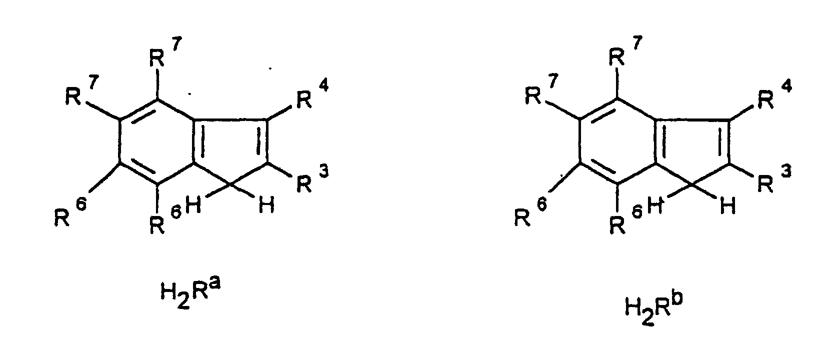 sind, gefolgt von der katalytischen Hydrierung des Bisindenylsystems.

5. Katalysator, enthaltend a) mindestens ein Metallocen der Formel I wie in einem oder mehreren der Ansprüche 1 bis 3 und b) mindestens einen Cokatalysator.

6. Katalysator gemäß Anspruch 5, worin der Cokatalysator ein Aluminoxan ist.

7. Katalysator gemäß Anspruch 5 oder 6, worin das Metallocen geträgert und/oder vorpolymerisiert ist.

8. Verfahren zur Herstellung eines Polyolefins in Gegenwart eines Katalysators nach einem oder mehreren der Ansprüche 5 bis 7.

9. Verwendung mindestens eines Katalysators nach einem oder mehreren der Ansprüche 5 bis 7 zur Herstellung von Polyolefinen.

## Claims

1. A metallocene of the formula I 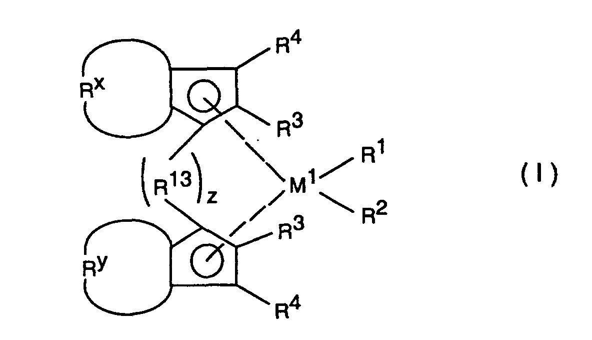 where
M¹ is a metal of group IVb, Vb or VIb of the Periodic Table,
R¹ and R² are identical or different and are each a hydrogen atom, a C₁-C₄₀-group such as a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group or a C₈-C₄₀-arylalkenyl group, an OH group or a halogen atom,
R³ and R⁴ are identical or different and are each a hydrogen atom, a halogen atom, a C₁-C₂₀-group, such as a C₁-C₁₀-alkyl group, a C₂-C₁₀-alkenyl group or a C₆-C₁₀-aryl group, an NR¹⁶₂, SR¹⁶, OSiR¹⁶₃, SiR¹⁶₃ or PR¹⁶₂ radical, where R¹⁶ is a halogen atom, a C₁-C₁₀-alkyl group or a C₆-C₁₀-aryl group,
R¹³ is a bridge such as 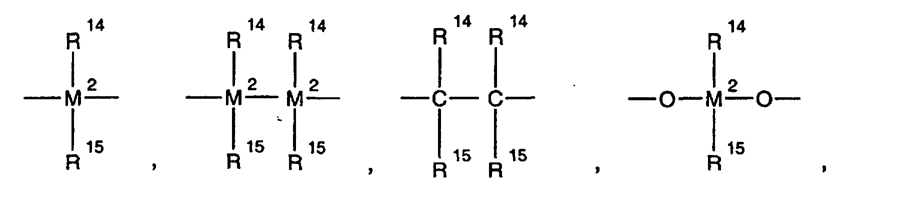 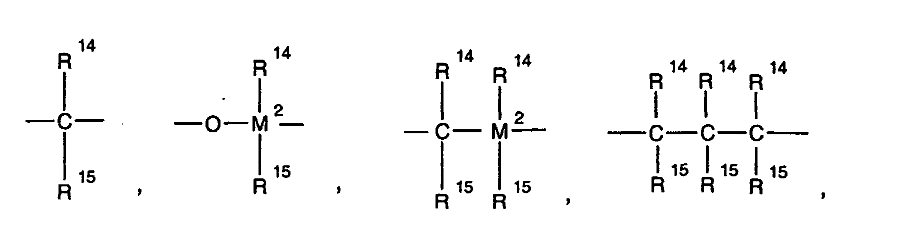 =BR¹⁴, =AIR¹⁴, -Ge-, -O-, -S-, =SO, =SO₂, =NR¹⁴, =CO, =PR¹⁴ or =P(O)R¹⁴, where R¹⁴ and R¹⁵ are identical or different and are each a hydrogen atom, a halogen atom or a C₁-C₄₀-group such as an Si(C₁-C₁₀-alkyl)₃ group, an Si(C₆-C₂₀-aryl)₃ group, an N(C₁-C₁₀-alkyl)₂ group, an N(C₆-C₂₀-aryl)₂ group, a B(C₁-C₁₀-alkyl)₂ group, a B(C₆-C₂₀-aryl)₂ group, a C₁-C₁₀-alkyl group, a C₁-C₁₀-fluoroalkyl group, a C₆-C₂₀-aryl group, a C₆-C₂₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R¹⁴ and R¹⁵ together with the atoms connecting them form a ring system, M² is silicon, germanium or tin and
z is 0 or 1,
R^{x} and R^{y} are identical or different and are a four-membered group 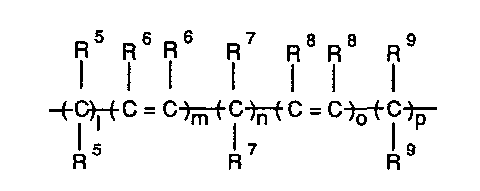
where
R⁵,R⁶,R⁷,R⁸ and R⁹ are identical or different and are each a hydrogen atom, a halogen atom or a C₁-C₄₀-group such as an Si(C₁-C₁₀-alkyl)₃ group, an Si(C₆-C₂₀-aryl)₃ group, an N(C₁-C₁₀-alkyl)₂ group, an N(C₆-C₂₀-aryl)₂ group, a B(C₁-C₁₀-alkyl)₂ group, a B(C₆-C₂₀-aryl)₂ group, a C₁-C₁₀-alkyl group, a C₁-C₁₀-fluoroalkyl group, a C₆-C₂₀-aryl group, a C₆-C₂₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or in each case two radicals R⁵, R⁶, R⁷, R⁸ and R⁹ together with the atoms connecting them form a ring system, and
l+n+p = 2 and m+o = 1, for example l = 1, m = 1, n = 1, o and p= 0 or l = 2, m = 1, n, o and p = 0 or l = 0, m = 1, n = 2, o and p = 0.

2. A metallocene of the formula I as claimed in claim 1, wherein
M¹ is zirconium or hafnium,
R¹ and R² are identical and are each a halogen atom or a C₁-C₄-alkyl group,
R³ are identical and are each a C₁-C₄-alkyl group,
R⁴ are identical and are each a hydrogen atom,
R¹³ is 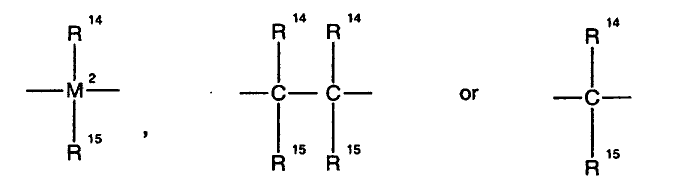
where
M² is silicon or germanium, R¹⁴ and R¹⁵ are identical or different and are each a C₁-C₁₀-alkyl or C₆-C₁₀-aryl group, z is equal to 1 and
R^{x} and R^{y} are identical.

3. A metallocene of the formula I as claimed in claim 1 or 2 which is a bisindenylzirconocene which is partially hydrogenated in at least one six-membered ring.

4. A process for preparing a metallocene of the formula I as claimed in claim 1, wherein the metallocene of the formula I is prepared according to the following reaction scheme: 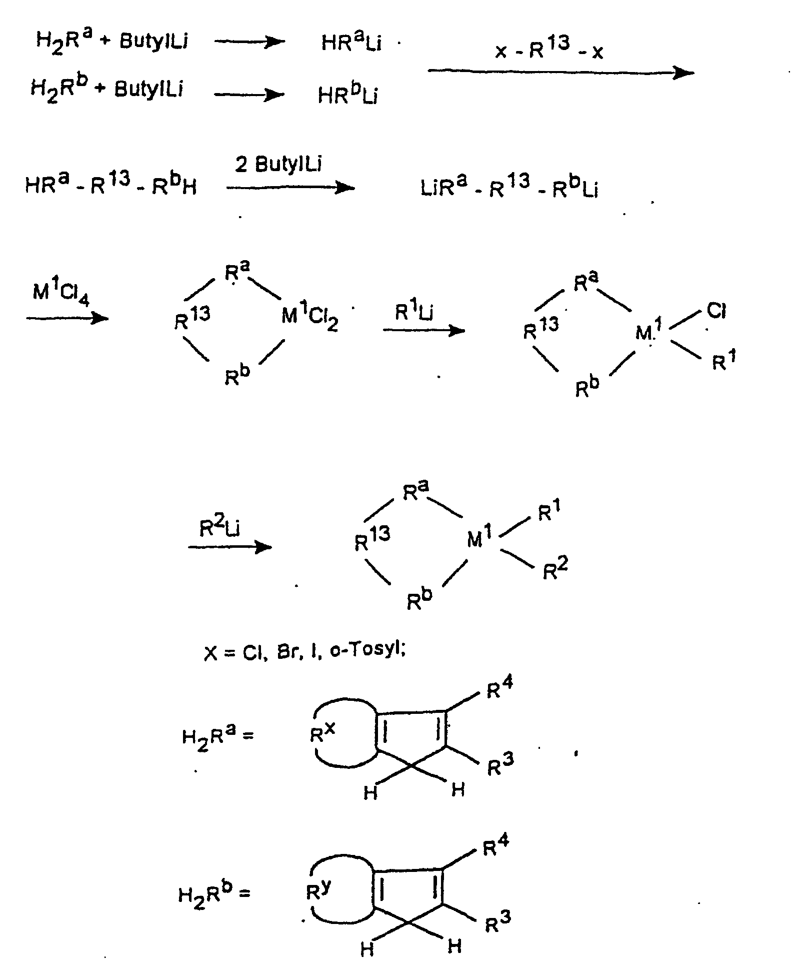 or the metallocene of the formula I is firstly formed with unsaturated radicals R^{x} and R^{y} and this intermediate is subsequently catalytically partially hydrogenated, where the formation of the metallocene is carried out as outlined above and H₂R^{a} and H₂R^{b} are 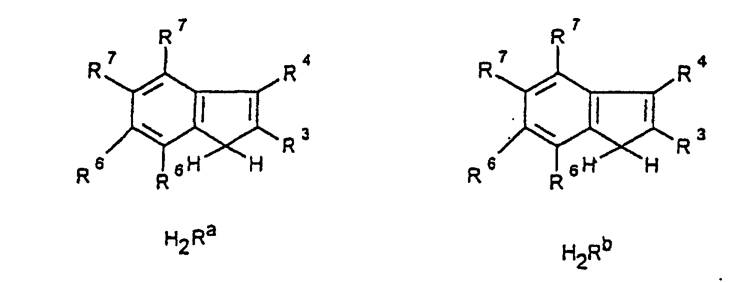 followed by the catalytic hydrogenation of the bisindenyl system.

5. A catalyst comprising a) at least one metallocene of the formula I as claimed in one or more of claims 1 to 3, and b) at least one cocatalyst.

6. A catalyst as claimed in claim 5, wherein the cocatalyst is an aluminoxane.

7. A catalyst as claimed in claim 5 or 6, wherein the metallocene is supported and/or prepolymerized.

8. A process for preparing a polyolefin in the presence of a catalyst as claimed in one or more of claims 5 to 7.

9. The use of at least one catalyst as claimed in one or more of claims 5 to 7 for preparing polyolefins.

## Revendications

1. Métallocène de formule générale I 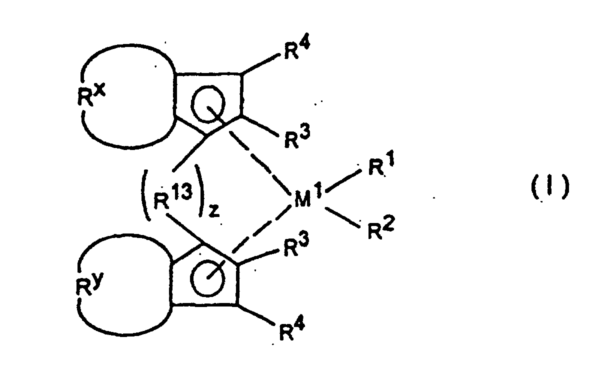 dans lequel
M¹ est un métal du groupe IVb, Vb ou VIb du système de classification périodique des éléments,
R¹ et R² sont identiques ou différents, et représentent un atome d'hydrogène, un groupe carboné en C₁ à C₄₀, tel qu'un groupe alkyle en C₁ à C₁₀, alcoxy en C₁ à C₁₀, aryle en C₆ à C₁₀, (aryle en C₆ à C₁₀)oxy, alcényle en C₂ à C₁₀, (aryle en C₇ à C₄₀)alkyle, (alkyle en C₇ à C₄₀)aryle ou (aryle en C₈ à C₄₀)alcényle, un groupe OH ou un atome d'halogène,
R³ et R⁴ sont à chaque fois identiques ou différents, et représentent un atome d'hydrogène, un atome d'halogène, un groupe hydrocarbure en C₁ à C₂₀, tel qu'un groupe alkyle en C₁ à C₁₀, alcényle en C₂ à C₁₀ ou aryle en C₆ à C₁₀, un groupe NR¹⁶₂, SR¹⁶, OSiR¹⁶₃, SiR¹⁶₃ ou PR¹⁶₂, dans lequel R¹⁶ est un atome d'halogène, un groupe alkyle en C₁ à C₁₀ ou aryle en C₆ à C₁₀,
R¹³ est un pont et représente un groupe : 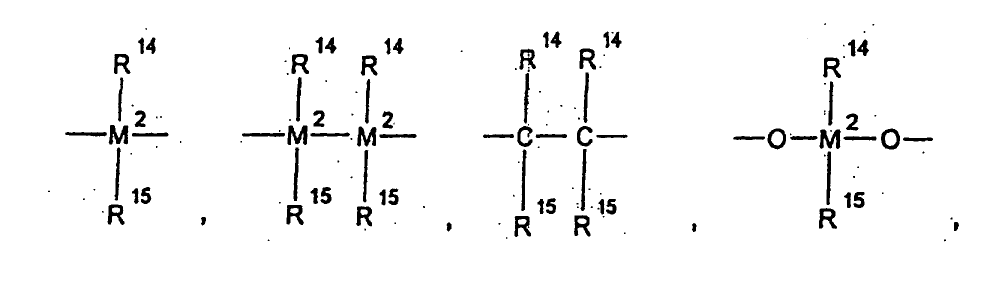 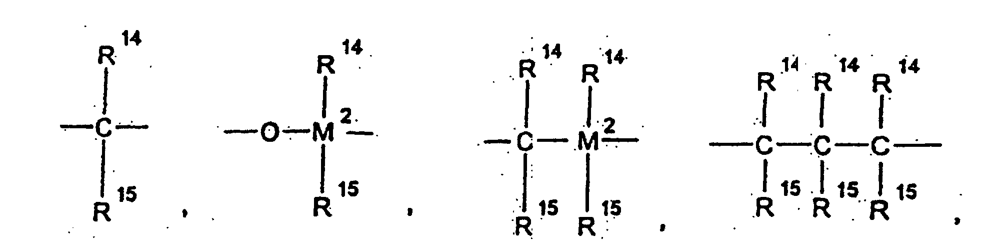 =BR¹⁴, =AlR¹⁴, -Ge-, -O-, -S-, =SO, =SO₂, =NR¹⁴, =CO, =PR¹⁴ ou =P(O)R¹⁴, où R¹⁴ et R¹⁵ sont à chaque fois identiques ou différents, et représentent un atome d'hydrogène, un atome d'halogène, un groupe carboné en C₁ à C₄₀, tel qu'un groupe Si(alkyle en C₁ à C₁₀)₃, Si(aryle en C₆ à C₂₀)₃, N(alkyle en C₁ à C₁₀)₂, N(aryle en C₆ à C₂₀)₂, B(alkyle en C₁ à C₁₀)₂, B(aryle en C₆ à C₂₀)₂, alkyle en C₁ à C₁₀, fluoro(alkyle en C₁ à C₁₀), aryle en C₆ à C₂₀, fluoro(aryle en C₆ à C₂₀) alcoxy en C₁ à C₁₀, alcényle en C₂ à C₁₀, (aryle en C₇ à C₄₀)alkyle, (aryle en C₈ à C₄₀)alcényle ou (alkyle en C₇ à C₄₀) aryle, ou bien R¹⁴ et R¹⁵ forment à chaque fois, conjointement avec les atomes les liant, un système cyclique, M² est un atome de silicium, de germanium ou d'étain et
z vaut 0 ou 1,
R^{x} et R^{y} sont identiques ou différents, et représentent un groupe à 4 éléments : 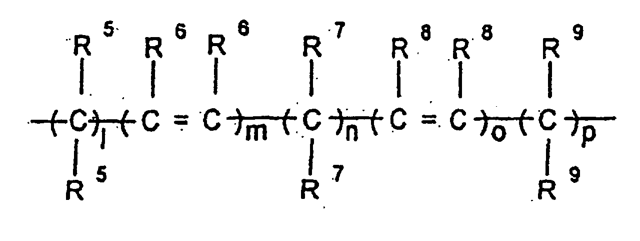
où
R⁵, R⁶, R⁷, R⁸ et R⁹ sont à chaque fois identiques ou différents, et représentent un atome d'hydrogène, un atome d'halogène ou un groupe carboné tel qu'un groupe Si(alkyle en C₁ à C₁₀)₃, Si(aryle en C₆ à C₂₀)₃, N(alkyle en C₁ à C₁₀)_{2'} N(aryle en C₆ à C₂₀)₂, B(alkyle en C₁ à C₁₀)₂, B(aryle en C₆ à C₂₀)₂, alkyle en C₁ à C₁₀, fluoro(alkyle en C₁ à C₁₀), aryle en C₆ à C₂₀, fluoro(aryle en C₆ à C₂₀), alcoxy en C₁ à C₁₀, alcényle en C₂ à C₁₀, (aryle en C₇ à C₄₀)alkyle, (aryle en C₈ à C₄₀)alcényle ou (alkyle en C₇ à C₄₀) aryle, ou bien deux groupes R⁵, R⁶, R⁷, R⁸ et R⁹ forment à chaque fois, conjointement avec les atomes les liant, un système cyclique, et
l + n + p = 2 et m + o = 1, par exemple
l = 1, m = 1, n = 1, o et p = 0 ou
l = 2, m = 1, n, o et p = 0 ou
l = 0, m = 1, n = 2, o et p = 0.

2. Métallocène de formule générale I selon la revendication 1, dans lequel
M¹ est un atome de zirconium ou d'hafnium,
R¹ et R² sont identiques et représentent un atome d'halogène ou un groupe alkyle en C₁ à C₄,
les groupes R³ sont identiques et représentent un groupe alkyle en C₁ à C₄,
les groupes R⁴ sont identiques et représentent un atome d'hydrogène,
R¹³ est un groupe : 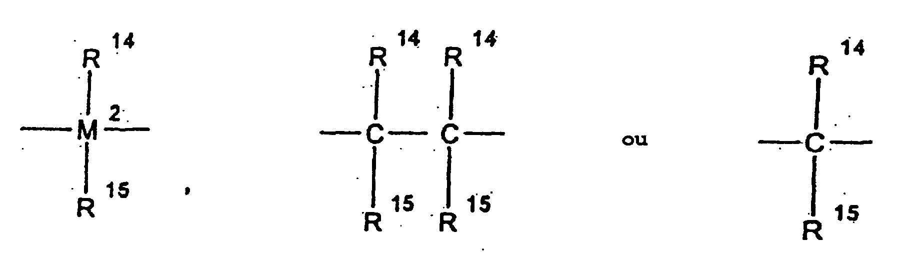
où
M² est un atome de silicium ou de germanium, R¹⁴ et R¹⁵ sont identiques ou différents et sont un groupe alkyle en C₁ à C₁₀ ou aryle en C₆ à C₁₀, z est égal à 1 et
R^{x} et RY sont identiques.

3. Métallocène de formule générale I selon la revendication 1 ou 2, qui est un bis-indénylzirconocène partiellement hydrogéné dans au moins un cycle hexagonal.

4. Procédé de préparation d'un métallocène de formule générale I selon la revendication 1, **caractérisé en ce que** l'on produit les métallocènes de formule générale I selon le schéma réactionnel suivant : 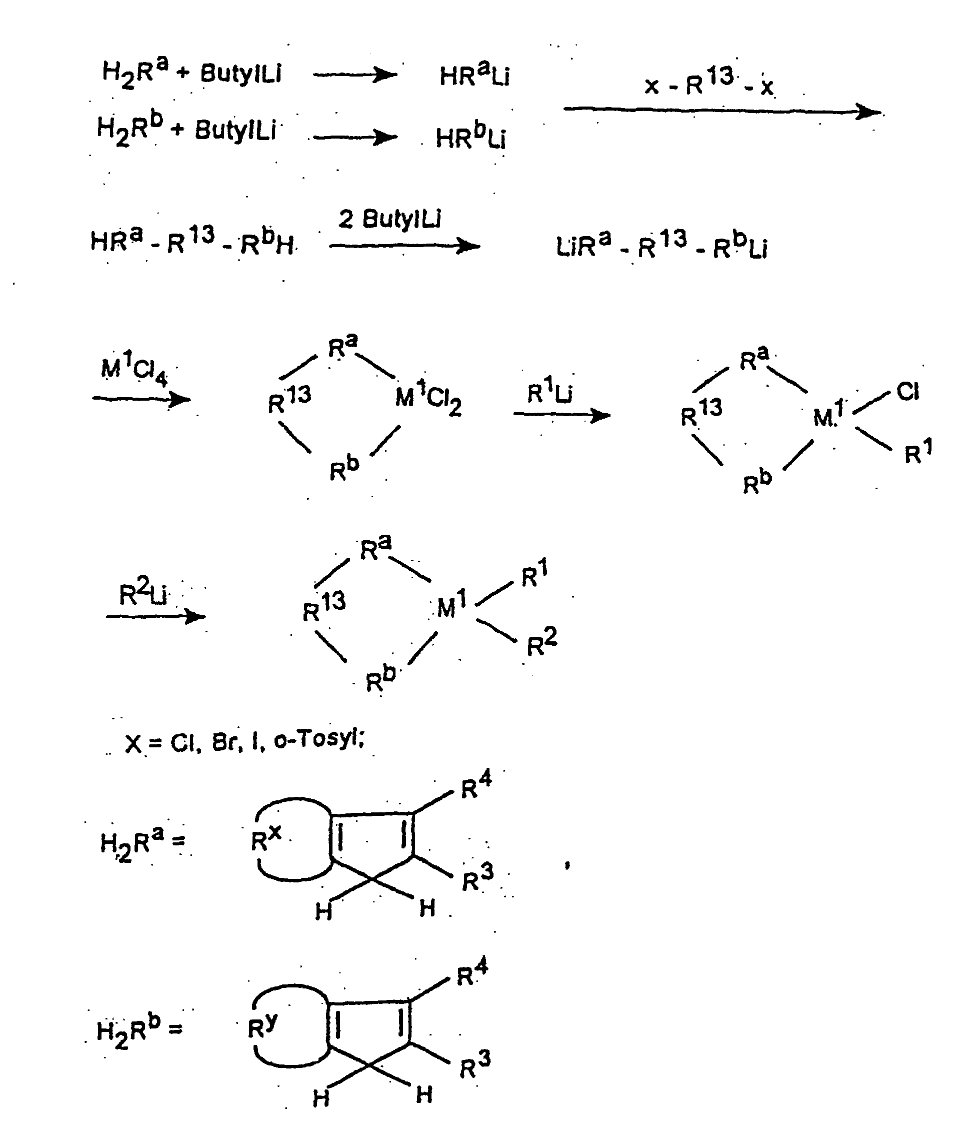 ou **en ce que** l'on prépare d'abord les métallocènes de formule I avec des groupes insaturés R^{x} et R^{y}, puis on les hydrogène partiellement par voie catalytique, la préparation du métallocène se déroulant comme décrit ci-dessus, où H₂R^{a} et H₂R^{b} sont : 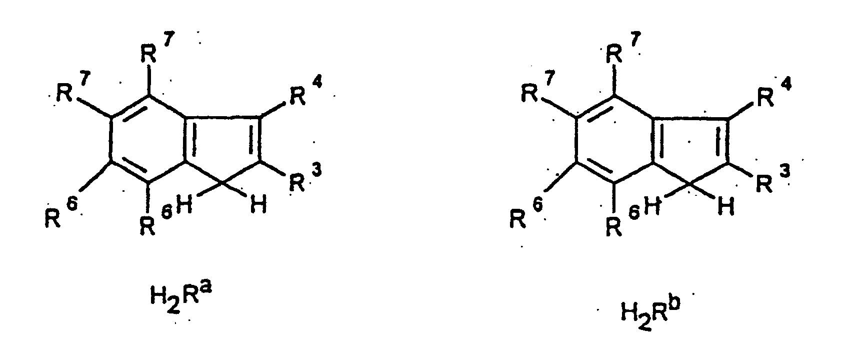 puis on procède à une hydrogénation catalytique du système bisindényle.

5. Catalyseur contenant a) au moins un métallocène de formule I tel que dans une ou plusieurs des revendications 1 à 3, et b) au moins un co-catalyseur.

6. Catalyseur selon la revendication 5, dans lequel le co-catalyseur est un aluminoxane.

7. Catalyseur selon la revendication 5 ou 6, dans lequel le métallocène est supporté et/ou prépolymérisé.

8. Procédé de préparation d'une polyoléfine en présence d'un catalyseur selon une ou plusieurs des revendications 5 à 7.

9. Utilisation d'au moins un catalyseur selon une ou plusieurs des revendications 5 à 7 pour préparer des polyoléfines.
